# EUROPÄISCHE PATENTSCHRIFT

(11) **EP 2 183 729 B1**
(45) Veröffentlichungstag und Bekanntmachung des Hinweises auf die Patenterteilung: **02.11.2016**
(21) Anmeldenummer: 08803329.5
(22) Anmeldetag: 28.08.2008
(51) Int. Cl.: G07F 7/10, G06F 21/00

(54) **SICHERHEITSTASTATUR**
SAFETY CONSOLE
CLAVIER DE SÉCURITÉ

(30) Priorität: 28.08.2007 DE 102007040637
(43) Veröffentlichungstag der Anmeldung: 12.05.2010
(73) Patentinhaber: VeriFone GmbH, 36251 Bad Hersfeld (DE)
(72) Erfinder: MÖLLER, Ottmar, 36039 Fulda (DE); OSTERMÖLLER, Michael, 36251 Bad Hersfeld (DE); IDE, Torsten, 34628 Merzhausen (DE); WAHL, Thomas, 36041 Fulda (DE)
(74) Vertreter: Qip Patentanwälte Dr. Kuehn & Partner mbB
(86) Internationale Anmeldenummer: PCT/EP2008/061311
(87) Internationale Veröffentlichungsnummer: WO 2009/027472

(56) Entgegenhaltungen:
- EP-A- 0 573 719
- EP-A- 0 836 161
- EP-B1- 1 346 384
- FR-A- 2 860 643
- US-A- 3 506 795
- US-A- 5 175 443
- US-A1- 2003 025 617
- US-A1- 2004 080 395

## Beschreibung

### BEREICH DER ERFINDUNG

Die vorliegende Erfindung betrifft eine Tastatur, insbesondere eine Sicherheitstastatur mit Hub, beispielsweise zur sicheren PIN Eingabe mit Tastenhub.

### HINTERGRUND DER ERFINDUNG

Tastaturen, insbesondere Tastaturen für PIN Eingabe mit Tastenhub, wie sie derzeit konventionell industriell hergestellt werden, sind meist aus einer Tastaturleiterplatte und beweglichen Tasten aufgebaut. Durch Drücken der Taste wird ein Kontakt auf der Leiterplatte geschlossen und Information kann erzeugt bzw. weitergeleitet werden.

Da es sich um vertrauliche Daten handeln kann, muss die Tastatur gegen Manipulationen geschützt werden. Beispielsweise muss verhindert werden, dass die eingegebene PIN von einem Angreifer aufgezeichnet werden kann.

Ein möglicher Angriff besteht bei Tastaturen mit Tastenhub im Auseinanderbau der Tastatur, dem anschließenden Einbau einer drucksensitiven Tastaturfolie bzw. dem direkten Kontaktieren der Tastenkontakte und der Mitschrift der PIN mit Hilfe einer Auswerteelektronik. Die Vermeidung dieser Problematik durch Benutzung von nicht ausbaubaren Tastaturen ohne Hub, wie zum Beispiel Touch-Screen-Bildschirmen, wird nicht allen Benutzern der Tastatur gerecht. Insbesondere für blinde Menschen ist eine Tastatur mit Hub unverzichtbar, da hier die Betätigung einer Taste am besten über den Tastsinn realisiert werden kann.

Ein bisheriger Ansatzpunkt, um die Manipulation einer Tastatur mit Hub zu verhindern, ist der Einbau entsprechender Gehäuseschalter, die das Auseinanderbauen der Tastatur verhindern sollen, indem sie einen Alarm oder die Löschung von Daten bei Unterbrechung von bestimmten Kontakten, die zum Beispiel zwischen Gehäuseteilen angeordnet sind, veranlassen. Solche Tastaturen sind beispielsweise in US 2003/0025617 A1 oder EP 1 346 384 B1 beschrieben. Ein Angreifer kann diese Vorkehrung jedoch dadurch umgehen, dass er nur die Tasten entfernt und eine Auswerteelektronik einbaut, ohne die Kontakte im Gehäuse, das sich unter der Tastatur befindet zu unterbrechen. Diese Kontakte sollen dabei Einzelteile der Tastatur gegen ein Zerlegen schützen.

Weiterer für ein Verständnis der Erfindung und ihres technologischen Hintergrund hilfreicher Stand der Technik ist in EP 0 836 161 A, US 5 175 443 A, US 3 506 795 A, US 2004/080395 A1, EP 0 573 719 A und FR 2 860 643 A beschreiben.

Es kann daher als eine Aufgabe der vorliegenden Erfindung angesehen werden, eine Tastatur bzw. Sicherheitstastatur bereitzustellen, die dazu befähigt, das Herausnehmen einer Taste oder das Auseinanderbauen der Tastatur zu detektieren.

### ZUSAMMENFASSUNG DER ERFINDUNG

Diese Aufgabe kann durch den Gegenstand der vorliegenden Erfindung gemäß den unabhängigen Ansprüchen gelöst werden. Vorteilhafte Ausführungsformen der vorliegenden Erfindung sind in den abhängigen Ansprüchen beschrieben.

Gemäß einem Aspekt der vorliegenden Erfindung wird eine Sicherheitstastatur gemäß Anspruch 1 beschrieben. Die Sicherheitstastatur weist unter anderem eine speziell ausgebildete Tastatur auf, die eine Taste und eine Kontaktplatte aufweist. Die Kontaktplatte weist eine erste und eine zweite Kontaktanordnung mit jeweils mindestens zwei elektrisch leitfähigen Elementen auf. Die Taste ist dazu ausgestaltet, in einem unbetätigten Zustand der Taste die leitfähigen Elemente der ersten Kontaktanordnung elektrisch miteinander zu verbinden und die leitfähigen Elemente der zweiten Kontaktanordnung nicht elektrisch miteinander zu verbinden. Die Taste ist ferner dazu ausgestaltet, in einem betätigten Zustand der Taste die leitfähigen Elemente der ersten Kontaktanordnung elektrisch miteinander zu verbinden und die leitfähigen Elemente der zweiten Kontaktanordnung elektrisch miteinander zu verbinden.

Anders ausgedrückt basiert die Idee der vorliegenden Erfindung gemäß dem Aspekt auf einer zweistufigen Tastenfunktion der Tastatur. Die Tastatur hat mindestens eine Taste und eine Kontaktplatte, beispielsweise in Form einer Leiterplatte. Auf der Kontaktplatte befinden sich zwei Kontaktanordnungen mit jeweils mindestens zwei elektrisch leitfähigen Kontakten. Die Taste kann eine Schaltmatte mit zwei Schaltpunkten besitzen. In unbetätigtem Zustand kann die Schaltmatte eine mechanische Vorspannung aufweisen, so dass die Schaltmatte bereits Kontakt mit der Kontaktplatte hat. Auf diese Weise kann die Schaltmatte einen (Sicherheits-) Kontakt einer der beiden Kontaktanordnungen bereits im unbetätigten Zustand schließen. Damit kann eine Manipulation, wie zum Beispiel das Herausnehmen bzw. Fehlen der Taste oder das Auseinanderbauen der Tastatur detektiert werden und entsprechende Vorkehrungen und Sicherheitsmaßnahmen können eingeleitet werden, sobald der Sicherheitskontakt beispielsweise beim unberechtigtem Entfernen der Taste unterbrochen wird. Eine weitere Funktion der Tastatur wird durch das Betätigen der Taste umgesetzt: Im gedrückten Zustand schließt die Schaltmatte die Kontakte beider Kontaktanordnungen auf der Kontaktplatte und Information kann eingegeben oder weitergeleitet werden. Durch diese Anordnung und zweistufige Funktion der Tastatur werden mögliche Angriffe beispielsweise durch Anbringen drucksensitiver Tastaturfolien, direkte Kontaktierung der Tastenkontakte oder Auseinanderbauen der Tastatur erschwert und damit der Datentransfer erheblich gesichert.

Im Folgenden werden Merkmale, Einzelheiten und mögliche Vorteile einer Tastatur gemäß dem Aspekt der Erfindung im Detail diskutiert.

Die Taste kann ein mechanisches Betätigungselement sein, das durch Ausüben einer Kraft bzw. Drücken zum Beispiel durch den Finger einer Hand bedient wird und nach Ausbleiben der Kraft wieder in den Ausgangszustand zurückkehrt. Sie kann mehrere Teile aufweisen, die jeweils aus unterschiedlichen Materialien bestehen können. Des Weiteren kann die Taste in unterschiedlichen geometrischen Formen, zum Beispiel kubisch oder zylindrisch ausgeführt werden.

Die Kontaktplatte kann eine Tastaturleiterplatte, beispielsweise eine gebräuchliche Platine sein. Das Basismaterial der Kontaktplatte kann elektrisch isolierendes Trägermaterial, wie zum Beispiel Kunststoff oder harzgetränkte Glasfasermatten sein. Auf der Kontaktplatte befinden sich Kontaktanordnungen, die so angebracht sind, dass sich jeweils eine Taste über zwei Kontaktanordnungen befindet. Jede Kontaktanordnung weist mehrere leitfähige Elemente auf, die aus elektrisch leitfähigen Materialien, wie zum Beispiel Kupfer bestehen. Jede Kontaktanordnung muss jedoch mindestens zwei leitfähige Kontaktelemente aufweisen, damit ein Stromkreis durch verbinden dieser Elemente geschlossen werden kann. Auf die geometrische Anordnung der leitfähigen Elemente auf der Kontaktplatte soll weiter unten eingegangen werden.

Die Tastatur kann eine Tastatur mit Hub sein, so dass zwischen dem betätigten und dem unbetätigten Zustand eine Krafteinwirkung notwendig ist und die Taste sich merklich aus einer ursprünglichen Position in eine alternative Position bewegt.

Die leitfähigen Elemente der zweiten Kontaktanordnung sind bezogen auf einen geometrischen Mittelpunkt der ersten Kontaktanordnung radial außerhalb der ersten Kontaktanordnung angeordnet.

Der geometrische Mittelpunkt kann bei einer kreisförmigen Kontaktanordnung der Punkt sein, der von allen Punkten des Kreises den minimalen Abstand hat. Die erste Kontaktanordnung kann jedoch in einer beliebigen Form ausgestaltet sein. Die leitfähigen Elemente der zweiten Kontaktanordnung sollen außen um die leitfähigen Elemente der ersten Kontaktanordnung angeordnet sein. In anderen Worten, sollen sich die Elemente der ersten Kontaktanordnung möglichst weit weg vom Rand der Taste befinden und somit möglichst schwer von Außen zugänglich sein. Dabei sollen sie zusätzlich von Elementen der zweiten Kontaktanordnung umgeben sein, so dass ein möglicher Angreifer bereits einen Kurzschluss verursachen kann, bevor er zu den Elementen der ersten Kontaktanordnung vordringt. Dadurch wird eine erhöhte Sicherheit gewährleistet und die Tastatur vor Manipulationen geschützt.

Die leitfähigen Elemente der ersten Kontaktanordnung können dabei die Sicherheitskontakte sein, die auch in unbetätigtem Zustand der Taste geschlossen sein sollen. Die leitfähigen Elemente der zweiten Kontaktanordnung können entsprechend Kontakte darstellen, die bei Betätigen der Taste geschlossen werden und für die Übertragung der Daten verantwortlich sind. Die zweistufige Tastatur kann aber, je nach dem welche der beiden Funktionen, Sicherheit oder Datentransfer, eine höhere Priorität hat, auch umgekehrt ausgestaltet sein. Das heißt, falls Datentransfer eine höhere Priorität genießen sollte als Sicherheit, dann sind die leitfähigen Elemente der ersten Kontaktanordnung, die sich im Zentrum der Taste befindet, für die Datenübertragung bereitgestellt.

Gemäß einer Ausführungsform der vorliegenden Erfindung sind die leitfähigen Elemente der ersten Kontaktanordnung konzentrisch zueinander angeordnet.

Dabei kann konzentrisch so verstanden werden, dass die Mittelpunkte der einzelnen leitfähigen Elemente der Kontaktanordnung zusammenfallen. Vorzugsweise sind die leitfähigen Elemente als Kreisflächen oder als kreisförmige Ringe ausgestaltet. Dies hat den Vorteil, dass die leitenden Elemente bei möglichst großer Fläche möglichst weit vom Rand der Taste angesiedelt sein können. Zusätzlich wäre durch eine leitfähige Kreisfläche, die in geringem Abstand mit einem leitfähigen, kreisförmigen Ring umgeben ist, die Möglichkeit gegeben, die Kontakte der ersten Kontaktanordnung auch zu schließen, wenn die Taste gegenüber der Kontaktplatte etwas versetzt oder verkippt ist, so dass die Kontakte sich zum Beispiel nicht unmittelbar unter dem geometrischen Mittelpunkt der Taste befinden.

Gemäß einer weiteren Ausführungsform der vorliegenden Erfindung weist die Taste eine flexible Matte und eine elektrisch leitfähige Schicht auf. Dabei ist die leitfähige Schicht an einer der Kontaktplatte zugewandten Oberfläche der Matte angeordnet.

Die flexible Matte kann nach Außen hin mit einem Tastenplättchen abgegrenzt sein, so dass sie vor Verunreinigungen und Feuchtigkeit geschützt ist. Die Taste kann aber auch derart ausgestaltet sein, dass die Schaltmatte direkt betätigt wird. Um zwischen dem betätigten und unbetätigten Zustand der Taste wechseln zu können, sollte die Schaltmatte aus einem elastischen Material, wie zum Beispiel Silikon bestehen. Ferner können in dem Material Aussparungen und Hohlräume vorhanden sein, um ein Komprimieren der flexiblen Matte im betätigten Zustand zu ermöglichen.

Im betätigten Zustand der Taste ermöglicht die elektrisch leitfähige Schicht ein Schließen der Kontakte auf der gegenüberliegenden Kontaktplatte durch Verbinden der elektrisch leitfähigen Elemente der Kontaktanordnungen. Die leitfähigen Elemente bestehen aus einem leitfähigen Material, wie zum Beispiel einem Metall wie Gold oder Kupfer oder sind als Kohlepillen ausgestaltet. Die geometrische bzw. räumliche Ausgestaltung der elektrisch leitfähigen Schicht kann entsprechend der Ausgestaltung der leitfähigen Elemente auf der Kontaktplatte variieren. Sind Beispielsweise die leitfähigen Elemente der ersten Kontaktanordnung, wie oben beschrieben als konzentrische Kreise angeordnet, so kann die leitfähige Schicht auf der Schaltmatte als eine Kreisfläche mit einem Radius, der mindestens dem Radius des äußersten Kreises der leitfähigen Elemente entspricht, sein.

Durch die Anordnung der flexiblen Matte über der leitfähigen Schicht ist sowohl die Kontaktanordnung, als auch die Leiterplatte vor Feuchtigkeit und Eingriffen zusätzlich geschützt.

Gemäß einer weiteren Ausführungsform der vorliegenden Erfindung weist die flexible Matte eine erste und eine zweite elektrisch leitfähige Schicht auf. Dabei sind die erste und zweite elektrisch leitfähige Schicht voneinander elektrisch getrennt.

Durch die räumliche bzw. elektrische Trennung der leitfähigen Schicht in zwei Bereiche können zwei unabhängige elektrische Schaltkreise über die leitfähigen Elemente der Kontaktanordnungen auf der Leiterplatte geschlossen werden. Damit kann zum Einen das Vorhandensein der Taste durch ein kontinuierliches Schließen des Sicherheitskontaktes überprüft werden und zum Anderen kann eine Betätigung der Taste durch ein kurzzeitiges Schließen der Kontakte in einem weiteren Bereich der Leiterplatte detektiert werden.

Gemäß einer weiteren Ausführungsform der vorliegenden Erfindung ist die flexible Matte derart ausgestaltet, dass im unbetätigten Zustand der Taste die erste elektrisch leitfähige Schicht einen geringeren Abstand zur Kontaktplatte aufweist als die zweite elektrisch leitfähige Schicht.

Gemäß einer weiteren Ausführungsform der vorliegenden Erfindung ist die flexible Matte derart ausgestaltet, dass im betätigten Zustand der Taste die erste elektrisch leitfähige Schicht den gleichen Abstand zur Kontaktplatte aufweist wie die zweite elektrisch leitfähige Schicht.

Eine räumliche und elektrische Trennung der leitfähigen Schicht in eine erste und eine zweite Schicht kann beispielsweise durch die Ausgestaltung der flexiblen Matte in Stufenform geschehen. Das heißt im unbetätigten Zustand kann die zweite leitfähige Schicht einen größeren Abstand zur Leiterplatte haben als die erste leitfähige Schicht. Insbesondere kann der Abstand zwischen den leitfähigen Elementen der ersten Kontaktanordnung und der ersten leitfähigen Schicht auf der Taste Null sein. Im betätigten Zustand wird die flexible Matte durch Drücken der Taste komprimiert so, dass die beiden leitfähigen Schichten auf der Matte auf einer Ebene sind bzw. den gleichen Abstand von der Kontaktplatte haben. Insbesondere kann dieser Abstand Null sein.

Gemäß einer weiteren Ausführungsform der vorliegenden Erfindung ist die Tastatur ferner derart ausgestaltet, dass die Taste für einen Übergang zwischen dem unbetätigten Zustand der Taste und dem betätigten Zustand der Taste um einen Hub zu verlagern ist.

Die Dateneingabe über eine Tastatur mit Hub bietet beispielsweise für Sehbehinderte Menschen mehr Komfort. Diese können über ihr Tastgefühl ein Betätigen der gewünschten Taste registrieren. Der Hub einer Taste sollte daher tastbar wahrnehmbar sein.

Die hierin beschriebene Sicherheitstastatur weist unter anderem die zuvor beschriebene Tastatur und eine Sicherungsschaltung auf. Dabei überwacht die Sicherungsschaltung einen elektrischen Widerstand zwischen zwei leitfähigen Elementen der ersten Kontaktanordnung.

Anders ausgedrückt kann durch eine Sicherheitstastatur ein Vorhandensein der Taste überwacht werden. Der Sicherheitskontakt der ersten Kontaktanordnung ist sowohl bei betätigtem als auch bei unbetätigtem Zustand der Taste durch die leitfähige Schicht der Schaltmatte geschlossen. Durch das Schließen des Stromkreises kann beispielsweise an einem Widerstand in der Sicherungsschaltung eine Spannung abfallen und registriert werden. Bei einer Änderung dieser Spannung an dem Widerstand über gewisse Fehlergrenzen hinaus oder wenn keine Spannung mehr am Widerstand abfällt, kann von einer Manipulation der Tastatur ausgegangen werden und entsprechende Schritte können eingeleitet werden.

Die Sicherungsschaltung kann in einem geschützten Kasten auf einer der Taste gegenüberliegenden Seite der Kontaktplatte angebracht sein und vor Angriffen durch stabile

Ausgestaltung des Kastens und zusätzlich durch eine Schicht aus mäanderförmig angeordneten, eng benachbarten Leiterbahnen, auch Mäanderschicht genannt, geschützt sein. Die Schaltung weist mindestens zwei Kontakte auf, die durch die Mäanderschicht zu der Kontaktplatte führen und durch die leitfähige Schicht an der Taste geschlossen werden können. Die Sicherheitsschaltung ist ferner in der Lage ein Löschen der in einem angeschlossenen System vorhandenen Daten zu veranlassen und/oder ein Alarmsignal auszusenden, falls eine Manipulation detektiert wird.

Gemäß einer weiteren Ausführungsform der vorliegenden Erfindung weist die Sicherheitstastatur ferner eine Auswerteschaltung auf. Dabei überwacht die Auswerteschaltung einen elektrischen Widerstand zwischen mindestens zwei elektrisch leitfähigen Elementen der zweiten Kontaktanordnung.

Die Auswerteschaltung kann beispielsweise über einen Widerstand zwischen den leitfähigen Elementen der zweiten Kontaktanordnung ein Betätigen der Taste detektieren. Nach dem die Taste gedrückt und die Kontakte der zweiten Kontaktanordnung geschlossen werden, detektiert die Auswerteschaltung eine Widerstandsänderung in der zweiten Kontaktanordnung und veranlasst einen Datentransfer, wie zum Beispiel die Weiterleitung eingegebener PIN Zahlen. Die Auswerteschaltung und die Sicherungsschaltung können als ein Schaltkreis ausgestaltet sein.

Gemäß einer weiteren Ausführungsform der vorliegenden Erfindung weist die zweite Kontaktanordnung mindestens drei leitfähige Elemente auf, die derart auf einer gekrümmten Bahn nebeneinander angeordnet sind, dass leitfähige Elemente, die mit einem Signalausgang der Auswerteschaltung verbunden sind, und leitfähige Elemente, die mit einem Signaleingang der Auswerteschaltung verbunden sind, entlang der gekrümmten Bahn abwechselnd angeordnet sind.

Die mehreren leitfähigen Elemente der zweiten Kontaktanordnung können abwechselnd mit einem Signaleingang und Signalausgang verbunden sein. Der Signalausgang ist dabei beispielsweise mit dem Pluspol einer Spannungsversorgung verbunden und der Signalausgang ist mit dem entsprechenden Minuspol verbunden oder umgekehrt. Als gekrümmte Bahn, auf der die leitfähigen Elemente angeordnet sind, kann eine Linie mit einer gewissen Krümmung verstanden werden. Dabei kann diese Linie in sich geschlossen sein, also einen Kreis, eine Ellipse oder ein Rechteck darstellen oder eine offene beispielsweise wellenförmige Linie sein. In einer bevorzugten Ausführungsform entspricht die gekrümmte Bahn einem Kreis und die leitfähigen Elemente entsprechen Segmenten eines kreisförmigen Ringes, die in geringem Abstand voneinander auf der gekrümmten Bahn angeordnet sind.

Ein wesentlicher Vorteil der wechselweisen Anordnung von leitfähigen Elementen auf einer gekrümmten Bahn und insbesondere auf einer Kreisbahn ist darin begründet, dass durch ein ungleichmäßiges Betätigen der Taste dennoch mindestens zwei benachbarte Kontakte geschlossen werden können. Wird beispielsweise die Kraft auf die Taste nur einseitig auf die rechte Hälfte der Taste ausgeübt, so wird auch die Schaltmatte nur in diesem Bereich komprimiert und die leitfähige Schicht kann nur die leitfähigen Elemente in einem begrenzten rechten Bereich der Leiterplatte miteinander verbinden. Durch den Wechsel von Signaleingang und Signalausgang der leitenden Elemente ist sichergestellt, dass dennoch ein Betätigen der Taste detektiert wird. Die geometrische Anordnung der leitfähigen Schicht auf der Taste ist dabei entsprechend der Anordnung der Kontakte auf der Kontaktplatte ausgestaltet.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die begleitenden Zeichnungen ersichtlich.

### BESCHREIBUNG DER FIGUREN

Fig. 1 zeigt eine schematische, perspektivische, teilweise weggeschnittene Seitenansicht einer Schaltmatte mit zwei Schaltpunkten zur Verwendung in einer Tastatur einer erfindungsgemäßen Sicherheitstastatur.
Fig. 2 zeigt schematisch eine untere Teilansicht einer erfindungsgemäßen Taste mit einer Schaltmatte und leitfähigen Schichten.
Fig. 3 zeit eine schematische Draufsicht auf eine Tastaturleiterplatte zur Verwendung in einer Tastatur einer erfindungsgemäßen Sicherheitstastatur.
Fig. 4 zeigt eine schematische, perspektivische, teilweise weggeschnittene Seitenansicht einer Tastatur einer erfindungsgemäßen Sicherheitstastatur mit einer Taste und einer Tastaturleiterplatte.
Fig. 5 zeigt eine schematische, perspektivische, teilweise weggeschnittene Gesamtansicht einer Tastatur mit nicht betätigter Taste einer erfindungsgemäßen Sicherheitstastatur.
Fig. 6 zeigt schematisch einen vergrößerten Ausschnitt einer zusammengebauten Tastatur einer erfindungsgemäßen Sicherheitstastatur mit nicht betätigter Taste aus Fig. 5.
Fig. 7 zeigt schematisch einen Schnitt durch die Gesamtansicht einer Tastatur einer erfindungsgemäßen Sicherheitstastatur mit nicht betätigter Taste aus Fig. 5.
Fig. 8 zeigt eine schematische, perspektivische, teilweise weggeschnittene Gesamtansicht einer Tastatur einer erfindungsgemäßen Sicherheitstastatur mit betätigter Taste.
Fig. 9 zeigt schematisch einen vergrößerten Ausschnitt einer zusammengebauten Tastatur einer erfindungsgemäßen Sicherheitstastatur mit betätigter Taste aus Fig. 8.
Fig. 10 zeigt schematisch einen Schnitt durch die Gesamtansicht einer Tastatur einer erfindungsgemäßen Sicherheitstastatur mit betätigter Taste aus Fig. 8.
Fig. 11 zeigt eine schematische, perspektivische, teilweise weggeschnittene Gesamtansicht einer Tastatur einer erfindungsgemäßen Sicherheitstastatur mit teilweise ausgebauter Taste.
Fig. 12 zeigt schematisch einen vergrößerten Ausschnitt einer Tastatur einer erfindungsgemäßen Sicherheitstastatur mit teilweise ausgebauter Taste aus Fig. 11.
Fig. 13 zeigt schematisch einen Schnitt durch die Gesamtansicht einer Tastatur einer erfindungsgemäßen Sicherheitstastatur mit teilweise ausgebauter Taste aus Fig. 11.
Fig. 14 zeigt eine schematische Gesamtansicht einer Sicherheitstastatur einer erfindungsgemäßen Sicherheitstastatur mit einer Sicherungs- und Auswertungsschaltung.

Alle Figuren sind lediglich schematische Darstellungen erfindungsgemäß hergestellter Tastaturen bzw. ihrer Bestandteile. Insbesondere Abstände und Größenrelationen sind in den Figuren nicht maßstabsgetreu wiedergegeben. In den verschiedenen Figuren sind gleiche oder identische Elemente mit den gleichen Referenznummern versehen.

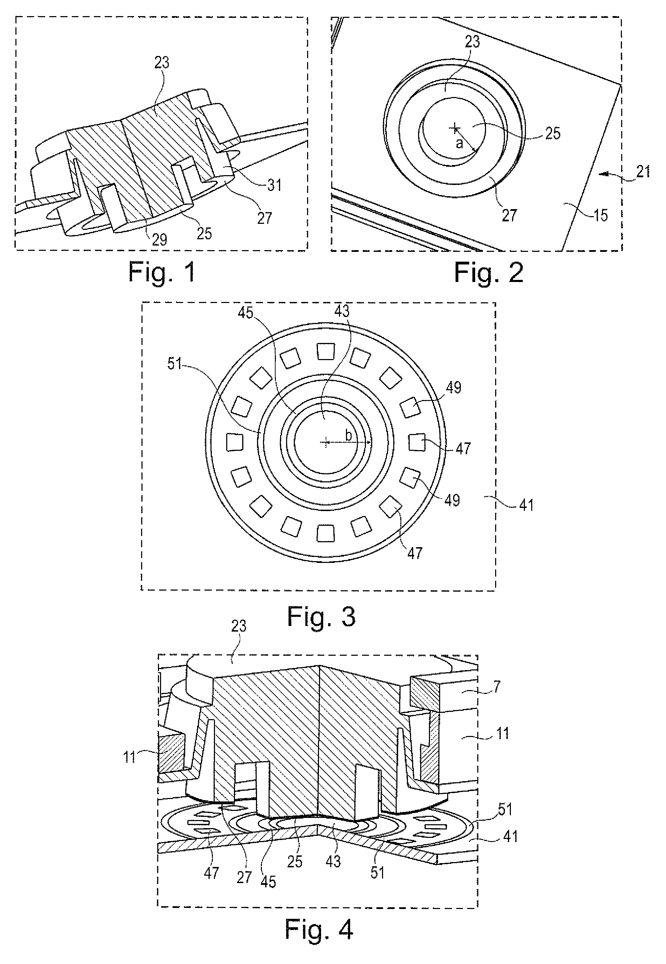

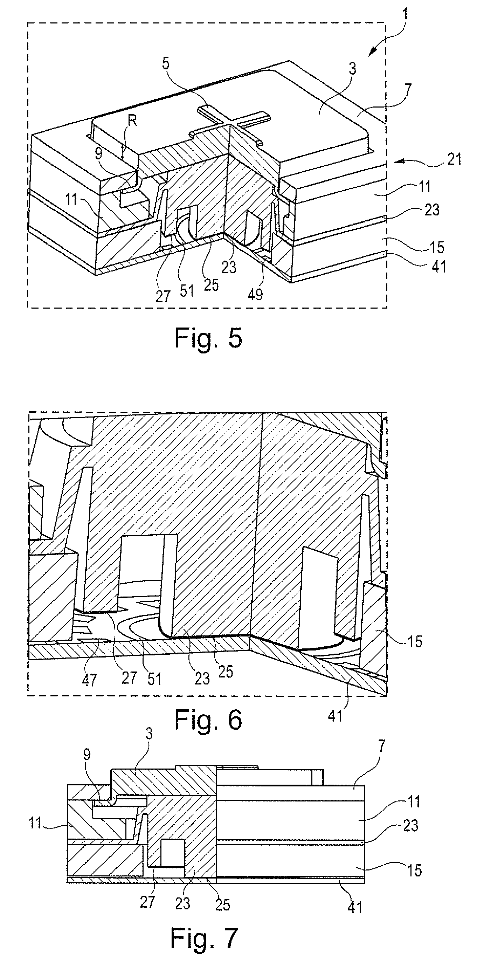

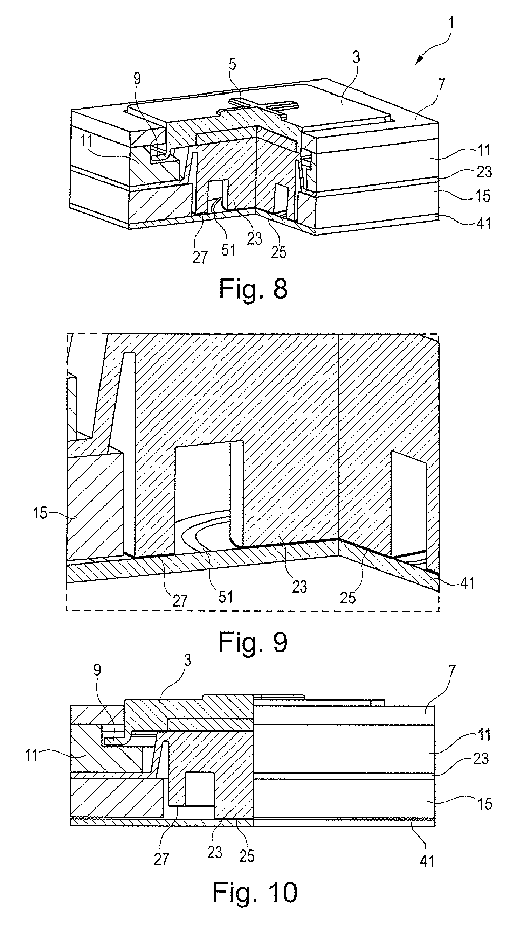

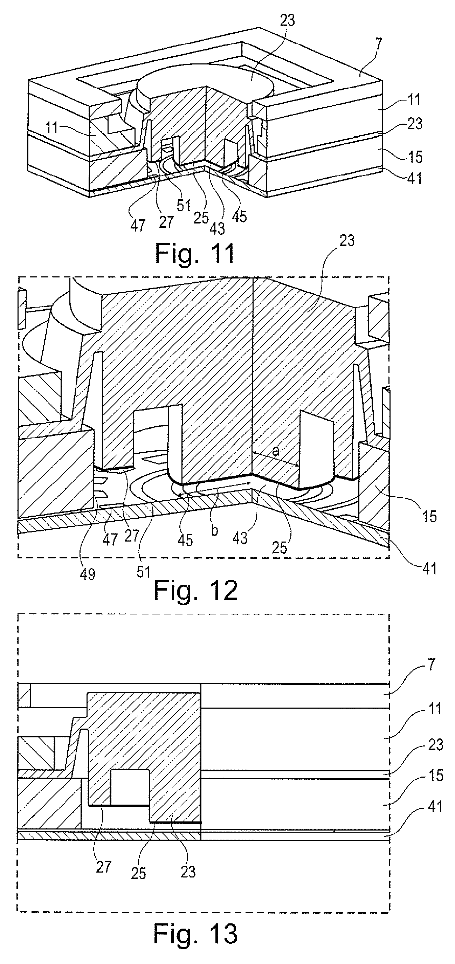

Fig. 1 bis Fig. 4 beschreiben die einzelnen Bauelemente einer Tastatur 1. In Fig. 5 bis Fig. 7 ist die Tastatur 1 mit eingebauter, nicht betätigter Taste 21 dargestellt. Fig. 8 bis Fig. 10 zeigen die Tastatur 1 mit eingebauter und betätigter Taste 21. Und Fig. 11 bis Fig. 13 stellen die Tastatur 1 mit teilweise ausgebauter Taste 21 dar. Im Folgenden werden die einzelnen Fig. detailliert beschrieben.

In Fig. 1 ist eine schematische Seitenansicht einer erfindungsgemäßen flexiblen Matte 23, nachfolgend auch als Schaltmatte bezeichnet, mit zwei elektrisch leitfähigen Schichten 25, 27 auf der unteren, der Kontaktplatte 41, nachfolgend auch als Leiterplatte bezeichnet, zugewandten Seite dargestellt. Die Schaltmatte 23 besteht aus Silikon und die elektrisch leitfähigen Schichten 25, 27 aus einem Metall, wie Kupfer oder Gold oder sind als Kohlepillen ausgestaltet. Die elektrisch leitfähigen Schichten 25, 27 sind als ein Sicherheitskontakt-Schicht 25 und eine Tastenkontakt-Schicht 27 ausgeführt. Die Schaltmatte 23 ist dabei im relaxierten, nicht betätigten Zustand zweistufig aufgebaut. Die Sicherheitskontakt-Schicht 25 befindet sich an einer ersten Stufe 29 der Schaltmatte 23. Die Tastenkontakt-Schicht 27 ist auf einer zweiten Stufe 31 angebracht, die eine etwas größere Distanz zu der Kontaktplatte 41 aufweist als die erste Stufe 29. Wie in Fig. 8 bis Fig. 10 dargestellt befinden sich im betätigten Zustand der Taste 21 beide Stufen 29, 31 auf gleicher Ebene so, dass sowohl die Sicherheitskontakt-Schicht 25, als auch die Tastenkontakt-Schicht 27 die elektrisch leitfähigen Elemente 43, 45, 47, 49 auf der Kontaktplatte 41 schließen.

Fig. 2 zeigt schematisch die untere Seite einer erfindungsgemäßen Taste 21 mit der Schaltmatte 23 und den leitfähigen Schichten 25, 27. Die leitfähige Schicht 25, die als Kreisfläche ausgestaltet ist und sich im Inneren der Taste 21 befindet, ist hier als eine Sicherheitskontakt-Schicht 25 ausgestaltet, das heißt diese leitfähige Schicht schließt entsprechende elektrisch leitfähige Elemente 43, 45 auf der Kontaktplatte 41, die das Vorhanden- und/oder Intaktsein der Taste 21 überwachen. Die zweite leitfähige Schicht 27 ist konzentrisch zu der ersten leitfähigen Schicht 25 angeordnet und ist als ringförmige Kreisfläche ausgestaltet. Sie ist hier als Tastenkontakt-Schicht 27 ausgestaltet und soll bei Betätigen der Taste 21 die elektrisch leitfähigen Elemente 47, 49 auf der Kontaktplatte 41 schließen, die für das Übermitteln von Daten zuständig sind.

In Fig. 3 ist eine schematische Draufsicht auf eine erfindungsgemäße Tastaturkontaktplatte 41 dargestellt. Die elektrisch leitfähigen Elemente 43, 45, 47, 49, 51 befinden sich an einer der Taste 21 zugewandten Seite der Kontaktplatte 41. Die elektrisch leitfähigen Elemente 43, 45, 47, 49 sind ausgestaltet als Sicherheitskontakt-Element-Ausgänge 43, Sicherheitskontakt-Element-Eingänge 45, Tastenkontakt-Element-Ausgänge 47 und Tastenkontakt-Element-Eingänge 49. Unter dem geometrischen Mittelpunkt der Taste 21 beziehungsweise direkt unter der Sicherheitskontakt-Schicht 25 auf der Schaltmatte 23 befindet sich auf der Kontaktplatte 41 ein Sicherheitskontakt-Element-Ausgang 43, an dem eine Spannung anliegt. Ein Sicherheitskontakt-Element-Eingang 45 ist als ringförmige Kreisfläche konzentrisch um den Sicherheitskontakt-Element-Ausgang 43 in geringem Abstand angeordnet. Dabei kann der Radius b des äußeren Ringes des Sicherheitskontakt-Element-Ausgangs 43 kleiner als der Radius a der Sicherheitskontakt-Schicht 25 auf der Schaltmatte 23 sein.

Weiter außen befinden sich Tastenkontakt-Elemente 47, 49. Beim Verbinden dieser elektrisch leitfähigen Elemente 47, 49 durch die Tastenkontakt-Schicht 27 wird ein Betätigen der Taste 41 registriert. Die Tastenkontakt-Elemente 47, 49 sind auf einer kreisförmigen Bahn, die konzentrisch zu den Sicherheitskontakt-Elementen 43, 45 verläuft angeordnet. Dabei wechseln sich Tastenkontakt-Element-Ausgänge 47 in geringem Abstand mit Tastenkontakt-Element-Eingängen 49 ab. Zwei weitere Kontakte, so genannte Guardringe 51 sind ebenfalls konzentrisch zu den Sicherheitskontakt-Elementen 43, 45 angeordnet. Die Guardringe 51 erhöhen zusätzlich die Sicherheit der Tastatur 1, indem sie ein unerwünschtes Schließen aller elektrisch leitfähigen Elemente 43, 45, 47, 49, 51 detektieren und für das Einleiten entsprechender Sicherheitsmaßnahmen sorgen. Ein Angriff der durch die Guardringe 51 verhindert werden kann, ist beispielsweise das Einfüllen einer leitenden Flüssigkeit in die Tastatur 1, so dass alle elektrisch leitfähigen Elemente 43, 45, 47, 49, 51 kurzgeschlossen werden.

Fig. 4 zeigt eine schematische Seitenansicht einer erfindungsgemäßen Tastatur 1 mit einer Taste 21 und einer Kontaktplatte 41 in nicht zusammengebautem Zustand. Die Taste 21 befindet sich dabei über der Kontaktplatte 41. Die Sicherheitskontakt-Elemente 43, 45 auf der Kontaktplatte 41 befinden sich gegenüber der Sicherheitskontakt-Schicht 25 auf der Schaltmatte 23.

In Fig. 5 ist eine schematische Gesamtansicht der erfindungsgemäßen Tastatur 1 mit eingebauter und nicht betätigter Taste 21 dargestellt. Die Tastatur 1 kann beispielsweise eine Sicherheitstastatur oder ein so genanntes Encrypted PIN pad (EPP) zur sicheren PIN Eingabe sein.

Die Taste 21 weist dabei ein Tastenplättchen 3 aus Metall auf, das für zusätzlichen Schutz sorgt und Eingriffe verhindert. Das Tastenplättchen 3 verfügt über eine Krempe 9, die unter den Rand einer Abdeckplatte 7 eingreift. Durch diese Ausgestaltung wird ein Entfernen des Tastenplättchens 3 verhindert. Zusätzlich kann durch einen Anschlagrahmen 11, der eine maximale Hubhöhe h vorgibt, zusammen mit der Krempe 9 ein zu tiefes Eindrücken der Taste 21 verhindert werden. Auf diese Weise sind die Strukturen im Inneren der Taste vor unkontrollierter Krafteinwirkung geschützt. Auf der Oberfläche des Tastenplättchens 3 befindet sich eine Tasthilfe 5, hier beispielsweise in Form eines Kreuzes. Die Tasthilfe 5 ist dreidimensional tastbar als Ausnehmung oder Erhebung ausgebildet und soll die Bedienung der Tastatur 1 für sehbehinderte Menschen erleichtern.

Die Abdeckplatte 7 ist ein so genannter Overlay aus Metall und dient der Stabilität und dem Schutz der Tastatur 1. Unter der Abdeckplatte 7 befindet sich der Anschlagrahmen 11. Als nächste Schicht folgt die Schaltmatte 23, die sowohl im Inneren der Taste 21 als auch am Rand in der Stützstruktur integriert ist. Zwischen Schaltmatte 23 und Kontaktplatte 41 befindet sich am Rand der Taste 21 ein Abstandsrahmen 15. Dieser besteht aus Metall und sorgt für die nötige Stabilität der Tastatur 1.

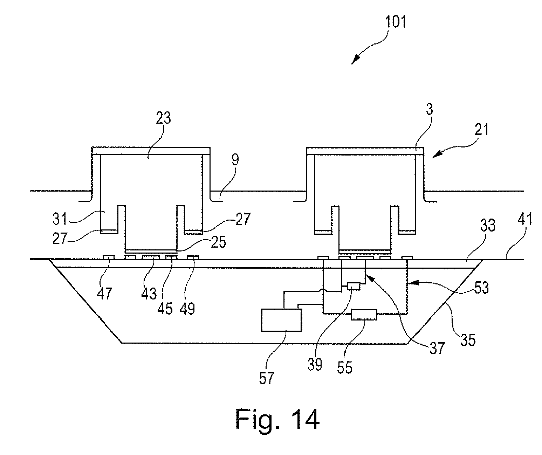

Unter dem Tastenplättchen 3 befindet sich der Hauptteil der Schaltmatte 23. Die Schaltmatte 23 steht in direktem Kontakt zu dem Tastenplättchen 3 und über die Sicherheitskontakt-Schicht 25 auch mit der Kontaktplatte 41, so dass die Sicherheitskontakt-Elemente 43, 45 auch bei nicht betätigter Taste 21 verbunden sind und so ein Vorhanden- und Intaktsein der Taste 21 in der Sicherungsschaltung 37 (siehe Fig. 14) unter der Kontaktplatte 41 detektiert werden kann.

Wie in Fig. 8 bis Fig. 10 dargestellt, wird durch ein Betätigen der Taste 21 eine Kraft von dem Tastenplättchen 3 auf die Schaltmatte 23 übertragen und die Schaltmatte 23 wird zusammengedrückt. Dadurch kommt die Tastenkontakt-Schicht 27 in Kontakt mit den Tastenkontakt-Elementen 47, 49 auf der Kontaktplatte 41 so, dass ein Stromkreis mit einer Auswerteschaltung 53 (siehe Fig. 14) geschlossen wird und das Betätigen der Taste 21 registriert werden kann. Durch die wechselweise Anordnung von Tastenkontakt-Element-Eingängen 45 und Tastenkontakt-Element-Ausgängen 43 auf der Kontaktplatte 41 kann auch bei nicht gleichmäßiger Kraftverteilung ein Schließen der Kontakte sichergestellt werden. Da immer ein Tastenkontakt-Element-Eingang 45 mit einem Tastenkontakt-Element-Ausgang 43 benachbart ist, wird durch beispielsweise einseitiges Drücken der Taste 21 mindestens ein Eingang 45 mit einem Ausgang 43 verbunden.

Fig. 11 bis Fig. 13 zeigen eine schematische Ansicht einer erfindungsgemäßen Tastatur 1 mit teilweise ausgebauter Taste. Dabei sind nochmals die Anordnungen der Kontakt-Schichten 25, 27 auf der Schaltmatte 23 gegenüber den Kontakt-Elementen 43, 45, 47, 49 dargestellt.

Fig. 14 zeigt eine schematische Gesamtansicht einer erfindungsgemäßen Sicherheitstastatur 101 mit einer möglichen Sicherungsschaltung 37 und einer möglichen Auswertungsschaltung 53. Die elektrisch leitfähigen Elemente 43, 45, 47, 49 auf der Kontaktplatte 41 sind mit Schaltkreisen 37, 53 im Inneren eines geschützten Raumes verbunden. Der geschützte Raum wird nach unten hin durch eine stabile Sicherheitskappe 35 oder eine ähnliche zugriffsgeschützte Abdeckung abgegrenzt. Auf der der Tastatur zugewandten Seite kann der Raum durch eine Mäanderschicht 33 vor Angriffen geschützt werden.

Sind die Sicherheitskontakt-Elemente 43, 45 auf der Kontaktplatte 41 durch die Sicherheitskontakt-Schicht 25 der Schaltmatte 23 geschlossen, so wird in der Sicherungsschaltung 37 am Widerstand 39 eine Spannung detektiert. Analog wird bei einem Schließen der Tastenkontaktelemente 47, 49 in der Auswertungsschaltung 53 eine Spannung an einem Widerstand 55 detektiert. Sowohl die Sicherungsschaltung 37 als auch die Auswertungsschaltung 53 stehen mit einem internen und/oder externen Datennetz 57 in Verbindung. Dadurch wird ein Datentransfer beispielsweise bei Eingabe eines PINs oder Geldbetrags ermöglicht. Falls eine Manipulation der Tastatur 101 detektiert wird, kann über die Verbindung zum Datennetz 57 ein Alarm ausgelöst werden oder die Löschung von Daten veranlasst werden. Das Schließen der Sicherheitskontakt-Elemente 43, 45 kann sowohl mit einem statischen Signal als auch mit dynamischen Signalen ausgewertet werden.

Die in den Figuren dargestellten Ausführungsbeispiele stellen exemplarisch das Aufbauschema und die Funktionsweise der Tastatur 1 bzw. Sicherheitstastatur 101 dar. In der Praxis gibt es mehrere Möglichkeiten die Tastatur 1, 101 so zu gestalten, dass bei der Betätigung der beschriebenen Tastatur 1, 101 eine nicht lineare Kraftkurve mit beispielsweise mindestens einem ausgeprägtem Druckpunkt gemessen werden kann. Die Form der Kraftkurve bzw. des Kraft-Weg-Diagramm ändert sich je nach Ausgestaltung der Schaltmatte 23. Beispielsweise kann durch die Geometrie der Schaltmatte 23 die Anzahl und Position der Druckpunkte im Kraft-Weg-Diagramm variiert werden. Die nicht linearen Kraftkurven mit ausgeprägten Druckpunkten tragen dazu bei, die Taktilität/Haptik der Taste zu verbessern.

Abschließend wird angemerkt, dass Ausdrücke wie "aufweisend" oder ähnliche nicht ausschließen sollen, dass weitere Elemente oder Schritte vorgesehen sein können. Des Weiteren sei daraufhingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

### BEZUGSZEICHENLISTE

- 1: Tastatur
- 3: Tastenplättchen
- 5: Tasthilfe
- 7: Abdeckplatte
- 9: Krempe
- 11: Anschlagrahmen
- 15: Abstandsrahmen
- 21: Taste
- 23: Schaltmatte
- 25: elektrisch leitfähige Schicht (Sicherheitskontakt-Schicht)
- 27: elektrisch leitfähige Schicht (Tastenkontakt-Schicht)
- 29: erste Stufe der Schaltmatte
- 31: zweite Stufe der Schaltmatte
- 33: Mäanderschicht
- 35: Sicherheitskappe
- 37: Sicherheitsschaltung
- 39: Widerstand
- 41: Kontaktplatte
- 43: elektrisch leitfähiges Element (Sicherheitskontakt-Element-Ausgang)
- 45: elektrisch leitfähiges Element (Sicherheitskontakt-Element-Eingang)
- 47: elektrisch leitfähiges Element (Tastenkontakt-Element-Ausgang)
- 49: elektrisch leitfähiges Element (Tastenkontakt-Element-Eingang)
- 51: Guardring
- 53: Auswerteschaltung
- 55: Widerstand
- 57: Datennetz
- 101: Sicherheitstastatur
- a: Radius der Sicherheitskontakt-Schicht
- b: Radius des inneren Ringes des Sicherheitskontakt-Element-Ausgangs
- h: Hub

## Patentansprüche

1. Sicherheitstastatur (101), aufweisend:
eine Tastatur (1);
wobei die Tastatur (1) aufweist:
mehrere Tasten (21); und
eine Kontaktplatte (41);
**dadurch gekennzeichnet, dass** die Kontaktplatte (41) für jede der Tasten (21) eine erste und eine zweite Kontaktanordnung mit jeweils mindestens zwei elektrisch leitfähigen Elementen (43, 45, 47, 49) aufweist; und
wobei jede der Tasten (21) dazu ausgestaltet ist, in einem unbetätigten Zustand der Taste (21) die leitfähigen Elemente (43, 45) der jeweiligen ersten Kontaktanordnung elektrisch miteinander zu verbinden und die leitfähigen Elemente (47, 49) der jeweiligen zweiten Kontaktanordnung nicht elektrisch miteinander zu verbinden; und
wobei jede der Tasten (21) dazu ausgestaltet ist, in einem betätigten Zustand der Taste (21) die leitfähigen Elemente (43, 45) der jeweiligen ersten Kontaktanordnung elektrisch miteinander zu verbinden und die leitfähigen Elemente (47, 49) der jeweiligen zweiten Kontaktanordnung elektrisch miteinander zu verbinden,
wobei für jede der Tasten (21) die leitfähigen Elemente (47, 49) der zweiten Kontaktanordnung bezogen auf einen geometrischen Mittelpunkt der jeweiligen ersten Kontaktanordnung radial außerhalb der jeweiligen ersten Kontaktanordnung angeordnet sind, so dass für jede Taste (21) die leitfähigen Elemente (43, 45) der jeweiligen ersten Kontaktanordnung von den leitfähigen Elementen (47, 49) der jeweiligen zweiten Kontaktanordnung umgeben sind,
wobei in der Sicherheitstastatur jede der Tasten (21) von einer Sicherungsschaltung (37) überwacht wird, welche dazu ausgelegt ist, jeweils einen elektrischen Widerstand (39) zwischen zwei leitfähigen Elementen (43, 45) der ersten Kontaktanordnung der jeweiligen Taste zu überwachen.

2. Sicherheitstastatur (101) nach Anspruch 1,
wobei für jede Taste die leitfähigen Elemente (43, 45) der jeweiligen ersten Kontaktanordnung konzentrisch zueinander angeordnet sind.

3. Sicherheitstastatur (101) nach einem der Ansprüche 1 bis 2,
wobei jede Taste (21) eine flexible Matte (23) und eine elektrisch leitfähige Schicht (25, 27) aufweist,
wobei für jede Taste (21) die leitfähige Schicht (25, 27) an einer der Kontaktplatte (41) zugewandten Oberfläche der Matte (23) angeordnet ist.

4. Sicherheitstastatur (101) nach Anspruch 3,
wobei für jede Taste (21) die flexible Matte (23) eine erste (25) und eine zweite (27) elektrisch leitfähige Schicht aufweist, wobei die erste (25) und zweite (27) elektrisch leitfähige Schicht voneinander elektrisch getrennt sind.

5. Sicherheitstastatur (101) nach Anspruch 4,
wobei für jede Taste (21) die flexible Matte (23) derart ausgestaltet ist, dass im unbetätigten Zustand der Taste (21) die erste elektrisch leitfähige Schicht (25) einen geringeren Abstand zur Kontaktplatte (41) aufweist als die zweite elektrisch leitfähige Schicht (27).

6. Sicherheitstastatur (101) nach einem der Ansprüche 3 bis 5,
wobei für jede Taste (21) die flexible Matte (23) derart ausgestaltet ist, dass im betätigten Zustand der Taste (21) die erste elektrisch leitfähige Schicht (25) den gleichen Abstand zur Kontaktplatte (41) aufweist wie die zweite elektrisch leitfähige Schicht (27).

7. Sicherheitstastatur (101) nach einem der Ansprüche 1 bis 6,
wobei die Tastatur (1) ferner derart ausgestaltet ist, dass jede Taste (21) für einen Übergang zwischen dem unbetätigten Zustand der Taste (21) und dem betätigten Zustand der Taste (21) um einen Hub (h) zu verlagern ist.

8. Sicherheitstastatur (101) nach einem der Ansprüche 1 bis 7,
wobei die Sicherheitstastatur (1) ferner für jede Taste (21) eine Auswerteschaltung (53) aufweist;
wobei die Auswerteschaltung (53) einen elektrischen Widerstand (55) zwischen mindestens zwei elektrisch leitfähigen Elementen (47, 49) der zweiten Kontaktanordnung überwacht.

9. Sicherheitstastatur (101) nach Anspruch 8,
wobei für jede Taste (21) die zweite Kontaktanordnung mindestens drei leitfähige Elemente (47, 49) aufweist, die derart auf einer gekrümmten Bahn nebeneinander angeordnet sind, dass leitfähige Elemente (47), die mit einem Signalausgang der Auswerteschaltung (53) verbunden sind, und leitfähige Elemente (49), die mit einem Signaleingang der Auswerteschaltung (53) verbunden sind, entlang der gekrümmten Bahn abwechselnd angeordnet sind.

## Claims

1. Safety console (101), comprising:
a console (1);
the console (1) comprising:
a plurality of keys (21); and
a contact board (41);
**characterized in that** the contact board (41) comprises, for each one of the keys (21), a first and a second contact array having at least two electrically conductive elements (43, 45, 47, 49) each; and
wherein each one of the keys (21) is configured, in an unactuated state of the key (21), to electrically connect the conductive elements (43, 45) of the respective first contact array to one another and to not electrically connect the conductive elements (47, 49) of the respective second contact array to one another; and
wherein each one of the keys (21) is configured, in an actuated state of the key (21), to electrically connect the conductive elements (43, 45) of the respective first contact array to one another and to electrically connect the conductive elements (47, 49) of the respective second contact array to one another,
wherein, for each one of the keys (21), the conductive elements (47, 49) of the second contact array are arranged radially outside the respective first contact array with respect to a geometric center of the respective first contact array, so that, for each key (21), the conductive elements (43, 45) of the respective first contact array are surrounded by the conductive elements (47, 49) of the respective second contact array, wherein, in the safety console, each one of the keys (21) is monitored by a safety circuit (37) configured to respectively monitor an electrical resistor (39) between two conductive elements (43, 45) of the first contact array of the respective key.

2. Safety console (101) according to claim 1,
wherein, for each key, the conductive elements (43, 45) of the respective first contact array are arranged concentric to one another.

3. Safety console (101) according to any one of claims 1 to 2,
wherein each key (21) comprises a flexible mat (23) and an electrically conductive layer (25, 27),
wherein, for each key (21), the conductive layer (25, 27) is disposed on a surface of the mat (23) facing the contact board (41).

4. Safety console (101) according to claim 3,
wherein, for each key (21), the flexible mat (23) comprises a first (25) and a second (27) electrically conductive layer, wherein the first (25) and second (27) electrically conductive layers are electrically isolated from one another.

5. Safety console (101) according to claim 4,
wherein, for each key (21), the flexible mat (23) is configured such that, in the unactuated state of the key (21), the first electrically conductive layer (25) has a lesser distance from the contact board (41) than the second electrically conductive layer (27).

6. Safety console (101) according to any one of claims 3 to 5,
wherein, for each key (21), the flexible mat (23) is configured such that, in the actuated state of the key (21), the first electrically conductive layer (25) has the same distance from the contact board (41) as the second electrically conductive layer (27).

7. Safety console (101) according to any one of claims 1 to 6,
wherein the console (1) is further configured such that each key (21) is to be displaced by one lift (h) for a transition between the unactuated state of the key (21) and the actuated state of the key (21).

8. Safety console (101) according to any one of claims 1 to 7,
wherein the safety console (1) further comprises an evaluation circuit (53) for each key (21);
the evaluation circuit (53) monitoring an electrical resistor (55) between at least two electrically conductive elements (47, 49) of the second contact array.

9. Safety console (101) according to claim 8,
wherein, for each key (21), the second contact array comprises at least three conductive elements (47, 49), which are adjacently arranged on a curved path such that conductive elements (47) connected to a signal output of the evaluation circuit (53) and conductive elements (49) connected to a signal input of the evaluation circuit (53) are arranged alternately along the curved path.

## Revendications

1. Clavier de sécurité (101), présentant :
un clavier (1),
le clavier (1) présentant :
plusieurs touches (21) ; et
une plaque porte-contact (41) ;
**caractérisé en ce que** la plaque porte-contact (41) présente, pour chaque touche (21), un premier et un second agencement de contact comportant respectivement au moins deux éléments électriquement conducteurs (43, 45, 47, 49) ; et
chacune des touches (21) étant conçue pour, dans un état non actionné de la touche (21), raccorder électriquement entre eux les éléments conducteurs (43, 45) du premier agencement de contact respectif et ne pas raccorder électriquement entre eux les éléments conducteurs (47, 49) du second agencement de contact respectif ; et chacune des touches (21) étant conçue pour, dans un état actionné de la touche (21), raccorder électriquement entre eux les éléments conducteurs (43, 45) du premier agencement de contact respectif et raccorder électriquement entre eux les éléments conducteurs (47, 49) du second agencement de contact respectif,
les éléments conducteurs (47, 49) du second agencement de contact étant disposés, pour chacune des touches (21), radialement en dehors du premier agencement de contact respectif par rapport à un centre géométrique du premier agencement de contact respectif, de telle manière que pour chaque touche (21), les éléments conducteurs (43, 45) du premier agencement de contact respectif sont entourés par les éléments conducteurs (47, 49) du second agencement de contact respectif,
chacune des touches (21) dans le clavier de sécurité étant surveillée par un circuit de sécurité (37), qui est conçu pour surveiller respectivement une résistance électrique (39) entre deux éléments conducteurs (43, 45) du premier agencement de contact de la touche respective.

2. Clavier de sécurité (101) selon la revendication 1,
dans lequel, pour chaque touche, les éléments conducteurs (43, 45) du premier agencement de contact respectif sont disposés de manière concentrique les uns par rapport aux autres.

3. Clavier de sécurité (101) selon l'une des revendications 1 à 2,
dans lequel chaque touche (21) présente un tapis souple (23) et une couche électriquement conductrice (25, 27), dans lequel, pour chaque touche (21), la couche conductrice (25, 27) est disposée sur une surface du tapis (23) faisant face à la plaque porte-contact (41).

4. Clavier de sécurité (101) selon la revendication 3,
dans lequel, pour chaque touche (21), le tapis souple (23) présente une première (25) et une seconde (27) couche électriquement conductrice, la première (25) et la seconde (27) couche électriquement conductrice étant séparées électriquement l'une de l'autre.

5. Clavier de sécurité (101) selon la revendication 4,
dans lequel, pour chaque touche (21), le tapis flexible (23) est conçu de telle manière que, dans l'état non actionné de la touche (21), la première couche électriquement conductrice (25) est à une distance inférieure de la plaque porte-contact (41) que la seconde couche électriquement conductrice (27).

6. Clavier de sécurité (101) selon l'une des revendications 3 à 5,
dans lequel, pour chaque touche (21), le tapis flexible (23) est conçu de telle manière que dans l'état actionné de la touche (21), la première couche électriquement conductrice (25) est à la même distance de la plaque-porte-contact (41) que la seconde couche électriquement conductrice (27).

7. Clavier de sécurité (101) selon l'une des revendications 1 à 6,
dans lequel le clavier (1) est en outre conçu de telle manière que chaque touche (21) est à déplacer selon une course (h) pour une transition entre l'état non actionné de la touche (21) et l'état actionné de la touche (21).

8. Clavier de sécurité (101) selon l'une des revendications 1 à 7,
dans lequel le clavier de sécurité (1) présente en outre pour chaque touche (21) un circuit d'évaluation (53) ; dans lequel le circuit d'évaluation (53) surveille une résistance électrique (55) entre au moins deux éléments électriquement conducteurs (47, 49) du second agencement de contact.

9. Clavier de sécurité (101) selon la revendication 8,
dans lequel, pour chaque touche (21), le second agencement de contact présente au moins trois éléments conducteurs (47, 49), qui sont disposés les uns à côté des autres sur une trajectoire courbe de telle manière que des éléments conducteurs (47), qui sont reliés à une sortie de signal du circuit d'évaluation (53), et des éléments conducteurs (49), qui sont reliés à une entrée de signal du circuit d'évaluation (53), sont disposés alternativement le long de la trajectoire courbe.
